# EUROPEAN PATENT SPECIFICATION

(11) **EP 4 482 188 B1**
(45) Date of publication and mention of the grant of the patent: **02.12.2026**
(21) Application number: 24212613.4
(22) Date of filing: 05.09.2019
(51) Int. Cl.: G06F 21/32, G06F 21/35, H04W 12/64, H04W 12/06, H04L 9/32, G06V 40/70

(54) **METHODS AND SYSTEMS FOR IMPROVED BIOMETRIC IDENTIFICATION**
VERFAHREN UND SYSTEME ZUR VERBESSERTEN BIOMETRISCHEN IDENTIFIZIERUNG
PROCÉDÉS ET SYSTÈMES D'IDENTIFICATION BIOMÉTRIQUE AMÉLIORÉE

(30) Priority: 13.09.2018 US 201816130053
(43) Date of publication of application: 25.12.2024
(62) Document number(s) of the earlier application(s) in accordance with Art. 76 EPC: 19195742.2 / 3 623 974
(73) Proprietor: Malikie Innovations Limited, Dun Laoghaire, Dublin A96 VR66 (IE)
(72) Inventor: ASHDOWN, Scott Newman, Waterloo, N2K 0A7 (CA)
(74) Representative: Murgitroyd & Company

(56) References cited:
- EP-A1- 2 843 601
- US-A1- 2012 154 117
- US-A1- 2013 251 216
- US-A1- 2016 042 357

## Description

### FIELD

The present application generally relates to biometric identification and to methods and systems for improved accuracy in biometric identification.

### BACKGROUND

Biometric identification has become commonplace in many electronic systems. Examples include fingerprint scanners, such as are now common in mobile phones, iris scanners, face recognition, voice recognition, *etc.* In some cases, these are devices to which a user voluntarily and actively submits biometric information. For example, a user may submit a request associated with the biometric information, and the biometric information may be authenticated before the request is granted. An example is fingerprint or facial-recognition based unlocking of a mobile phone. This is akin to entry of a password, in which a user purports to be a particular authorized individual and provides input data to authenticate that claim. This is an example of one-to-one matching in which the input biometric information is compared against one (or very few) templates of the correct data. One-to-one biometric matching tends to be fairly accurate compared to one-to-many matching in which input biometric information is compared against a large database of biometric data so as to identify an individual from among many possible individuals.

One example of one-to-many biometric matching is a user request to enter a secured area at a gate, doorway or other checkpoint, which may involve input of voice information, an iris scan, fingerprint scan, or the like. Consider for example a fingerprint-based entry at a workplace or at a theme park. There may be thousands or tens of thousands of possible matches. In yet other cases, biometric information may be obtained without user participation so as to identify a user. For example, security systems or other monitoring systems may be configured to analyze video or still picture images to detect and obtain facial images and identify the person in the image from among a large database of known persons for whom the system has facial data. Such one-to-many biometric identification system may have a significant False Acceptance Ratio (FAR), which is a measure of how often a particular matching algorithm may incorrectly identify a match.

It would be advantageous to provide for systems and methods of biometric identification that have the potential for more accurate identifications.

Patent documents EP 2 843 601 A1 and US 2016/042357 A1 are representative of the available art.

### SUMMARY

The invention is defined by a method, system, readable media, and computer program as defined in the independent claims that follow.

### BRIEF DESCRIPTION OF THE DRAWINGS

Reference will now be made, by way of example, to the accompanying drawings which show example embodiments of the present application, and in which:
Figure 1 shows an example system for biometrically identifying a person;
Figure 2 shows, in flowchart form, a first example method of identifying a person using biometrics;
Figure 3 shows, in flowchart form, a second example method of identifying a person using biometrics;
Figure 4 shows in block diagram form, a simplified example of an authenticator;
Figure 5 diagrammatically illustrates a first use case; and
Figure 6 diagrammatically illustrates a second use case.

Similar reference numerals may have been used in different figures to denote similar components.

### DESCRIPTION OF EXAMPLE EMBODIMENTS

The present application describes methods and systems for improving the quality and confidence of biometric identification.

In one aspect, the present application describes a method of identifying a person located in a defined geographic area using an electronic device, the electronic device including at least one memory unit that includes stored biometric data for a set of people. The method may include obtaining biometric information from the person in the defined geographic area and information related to one or more devices located within the defined geographic area; obtaining, from a stored set of associations between people and devices, one or more identified people based on the information related to one or more devices located within the defined geographic area; reducing the set of people to a subset of people based on the one or more identified people; detecting a sufficient match between the biometric information and the stored biometric data associated with an individual from the subset of people; and outputting a signal identifying said individual as the person.

In another aspect, the present application describes a system for identifying a person located in a defined geographic area. The system includes at least one memory unit that includes stored biometric data for a set of people; and an electronic system having at least one biometric input device to obtain biometric information from the person in the defined geographic area, a communications unit to obtain information related to one or more devices located within the defined geographic area and to obtain, from a stored set of associations between people and devices, one or more identified people based on the information related to one or more devices located within the defined geographic area, and a processor to reduce the set of people to a subset of people based on the one or more identified people, detect a sufficient match between the biometric information and the stored biometric data associated with an individual from the subset of people, and cause output of a signal identifying said individual as the person.

In yet a further aspect, the present application describes non-transitory computer-readable media storing computer-executable program instructions which, when executed, cause one or more processors to perform the described methods.

In yet another aspect, the present application describes a computer-readable signal containing program instructions which, when executed by a computer, cause the computer to perform the described methods.

Other aspects and features of the present application will be understood by those of ordinary skill in the art from a review of the following description of examples in conjunction with the accompanying figures.

Any feature described in relation to one aspect or embodiment of the invention may also be used in respect of one or more other aspects/embodiments. These and other aspects of the present invention will be apparent from, and elucidated with reference to, the embodiments described herein.

In the present application, the term "and/or" is intended to cover all possible combinations and sub-combinations of the listed elements, including any one of the listed elements alone, any sub-combination, or all of the elements, and without necessarily excluding additional elements.

As noted above, biometric identification has become commonplace in many electronic systems. One-to-many matching presents a challenge in achieving an acceptable FAR. Biometric information obtained regarding a subject, which may contain distortions or imperfections in the data, is compared against a large database of pre-stored biometric data, *e.g.* profiles, so as to try to find a match between the obtained information and one of the pre-stored profiles. Each profile is associated with an individual person and matching obtained biometric information to the profile identifies the subject as that individual person. The quality of the match required to constitute an identification may be tuned depending on the system. A lower quality match will lead to more false positives, whereas a higher quality match may result in few matches and difficultly identifying individuals that have a legitimate profile in the database. Accordingly, it would be advantageous to find mechanisms for improving the confidence and quality of biometric identification.

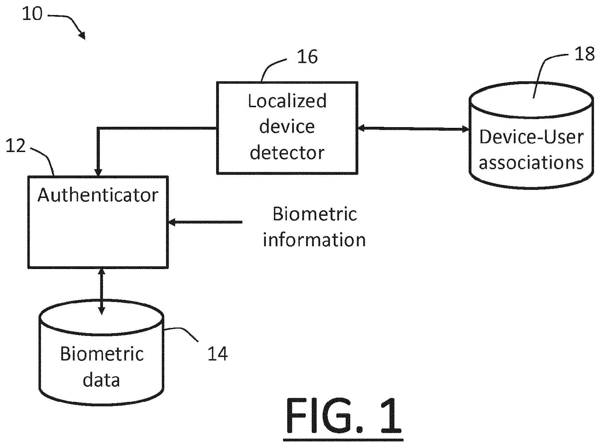

Reference is now made to Figure 1, which shows an example of a system 10 that improves biometric identification confidence through the use of side information. In particular, the system 10 may use side information regarding a local population to reduce the set of persons in the database to a subset of persons likely present in the area of the system 10. If a biometric match is found with the biometric data, *e.g.* profile, of one of the persons in the subset, then it has a higher confidence of being accurate than a match without the side information.

The system 10 includes an authenticator 12 which has access to a memory unit 14, locally or remotely, that stores biometric data for a set of people. The authenticator 12 is an electronic device that includes a processor, memory, communications subsystem(s), and the like. The electronic device further includes at least one biometric input device, locally or remotely, capable of obtaining biometric information from a subject. The biometric information is any data obtained by way of a sensor and representative of a personal characteristic. The biometric information may be an image, video, iris scan, fingerprint scan, voice input, or any other such data.

The electronic device may include a mobile phone, smart phone, tablet, laptop computer, desktop computer, computing kiosk, point-of-sale device, gaming system, headless computer, or any other electronic device capable of carrying out the described operations herein under executable program control.

The system 10 further includes, or has access to, information regarding devices and associated users in a geographic location corresponding to the location of the subject. The devices may be described herein as mobile devices, such as mobile phones, smart phones, tablets, laptops, or the like, but are not necessarily limited to mobile devices. In some cases, the devices may include stationary or fixed computing devices. In this example, the system 10 includes a localized device detector 16. The localized device detector 16 may be a standalone system or part of another system, such as a security system, internal computer network, cellular system, or any other computing system that includes, or has access to, data identifying devices in a geographic area. Such a system may include, for example, a private WiFi network capable of identifying mobile devices or stationary devices attached to the network in the coverage area of the WiFi network. In some cases, a secure device manager is capable of authenticating devices (e.g. using a certificate) and securely running code on the device to obtain device location information, such as GPS data. In another example, it may include local Bluetooth network or other short-range communication system capable of identifying devices attached to the network in its coverage area. In yet another example, it may include a cellular network capable of identifying mobile devices in communication with one or more base stations in the cellular network in the vicinity of an area of interest. In yet further examples, the computing system may include a system that obtains location data from one or more devices in an area. As an example, some facilities may include wireless location systems that may use a combination of WiFi fingerprinting and GPS location reporting to track the location of devices, in particular mobile devices, within a facility. Devices may be also communicate location data through attachment to a wired network port, e.g. Ethernet port, having a known location. In some examples, the computing system may have pre-stored location data for a device having a fixed location, such as a computing kiosk or other such device. Other such systems for identifying devices within a defined geographic area will be appreciated by those of ordinary skill in the art having regard to these examples and the description that follows.

The localized device detector 16 in this example includes a memory 18 containing device-user associations. The device-user associations provide information that associates one or more users *(i.e.* persons) with each device. In some cases the association is one-to-one. In some cases, a device may be associated with more than one user, or may be associated with a plurality of users belonging to a category or class. The stored set of associations may be a list of device identifiers and, for each device identifier, one or more user identifiers, structured in any suitable data structure.

In some other embodiments, the device-user associations may be stored at the authenticator 12 or in a remote memory to which the authenticator 12 has access.

The localized device detector 16 provides information regarding the devices detected in a defined geographic area associated with the subject. The defined geographic area is an areas associated with the source of biometric information. If the biometric input device supplying information to the authenticator 12 is physically proximate the authenticator 12, then the defined geographic area is proximate the authenticator 12; however, the biometric input device may be remote from the location of the authenticator 12 in some implementations. The defined geographic area may be of a size suitable for a particular implementation and subject to any resolution limitations of the localized device detector 16.

The information regarding devices detected in the area, combined with the device-user associations, provides the authenticator 12 with a set of users likely to be in the defined geographic area. Accordingly, when the authenticator 12 attempts to match the biometric information to stored biometric data, *e.g.* a biometric profile, it may limit the search to profiles associated with the users identified as likely to be in the defined geographic area, at least initially. In some implementations, the authenticator 12 may first attempt to match the obtained biometric information of the subject to the subset of stored profiles for the users associated with devices detected in the area. Such a match, due to the two sources of identification, provides a higher confidence match that an identification based on biometrics alone. In some implementations, if no match is found then the authenticator 12 may attempt to match the biometric information to one of the other profiles in the set of profiles of stored biometric data. Such a match may have a lower associated confidence since it is not corroborated by identification of an associated device in the area.

It will be appreciated that in some embodiments, not all users in the device-user associations are necessarily represented by a biometric profile in the stored biometric data. That is the persons in the two databases may only partially overlap, such that some individuals in the device-user associations may not have a corresponding biometric profile, and some biometric profiles may not have an associated mobile device. In this sense, the stored biometric data may include a set U of profiles for users U₁ to U_{N}. The stored device-user associations may include associations for a set V of users V₁ to *V_{M}.* The detected devices in the area result in a selection of a subset of V. The intersection of V and U produces a subset P of biometric profiles for the persons likely to be in the geographic area.

The user identifier(s) associated with a device may have a prescribed format for uniquely identifying a particular user. In some cases, this may be a name, an email address, an employee number, or some other identifier. Likewise, the biometric profile for a user includes biometric data for the user and some user identifier. In many implementations, the user identifier in the biometric profile and the user identifier in the device-user associations is the same. In some implementations it may not be the same, in which case a further matching operation using a data structure of concordance between user identifiers may be employed to map a user identifier from the device-user associations to one or more user identifiers in the biometric profiles.

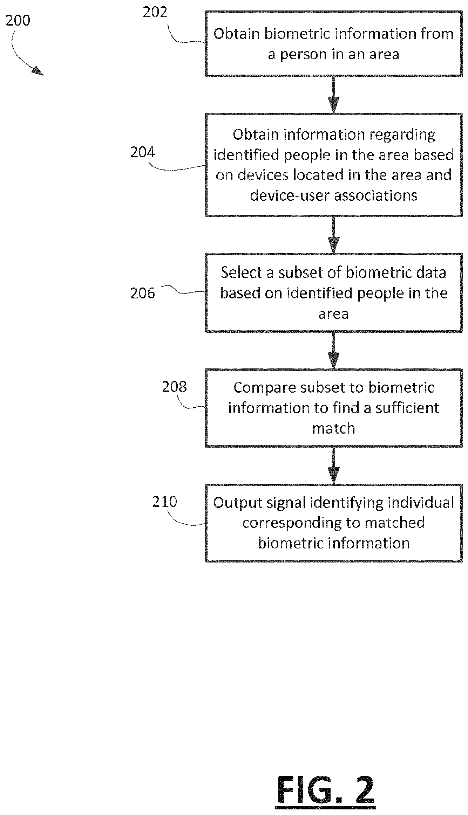

Reference is now made to Figure 2, which shows, in flowchart form, one example method 200 of identifying a person located in a defined geographic area using an electronic device. The method 200 includes an operation 202 of obtaining biometric information from a subject person in a defined geographic area. As noted above, the biometric information may be data representative of any person characteristic that may be used to uniquely identify a person. Examples include, but are not limited to, facial features, fingerprints, voice, irises, retinas, vein or palm patterns, DNA, *etc.* The input device may include a camera, microphone, scanner, capacitive sensors, or any such sensor for obtaining biometric data.

In operation 204, information regarding identified people in the area is obtained. The identified people are people associated with devices located in the area, and the identification of those people may be based on a set of stored associations between each device and one or more users.

A biometric authentication system stores a set of biometric profiles, *i.e.* biometric data, for a relatively large number of people. This may be stored in the form of a database or any other suitable data structure that enables queries to match biometric information to one or more of the stored profiles. In operation 206, a subset of the stored profiles may be selected based on the information regarding identified people in the area. That is, the subset may be selected to contain the biometric profile of any person identified in operation 204 that has a corresponding biometric profile in the database.

The obtained biometric information is then compared to the profiles in the subset to attempt to identify a sufficient match in operation 208. The determination of whether there is a "sufficient" match may be tuned to a particular application. Various thresholds may be set and/or adjusted for achieving a desired degree of confidence in the accuracy of the identification, and may vary depending on the nature of the biometric data being tested.

When a sufficient match is found to a profile in the subset, a signal is output in operation 210 identifying the individual associated with the matched biometric profile as the subject. Depending on the implementation and application, the signal may indicate that the subject is permitted access to a system or area, or that the subject has been authenticated for a security purpose, or that a request submitted by the subject is authorized, like a purchase or the like. A separate request handler system may have initiated the biometric authorization process by sending an identification request signal to the authenticator, and the signal returned may indicate success, failure, or the identity of the individual (if identified with sufficient confidence). In some cases, it may indicate whether the identification is high confidence *(e.g.* one of the profiles in the subset) or low confidence *(e.g.* one of the profiles but not in the subset), and a low confidence identification may trigger additional authentication or identification operations.

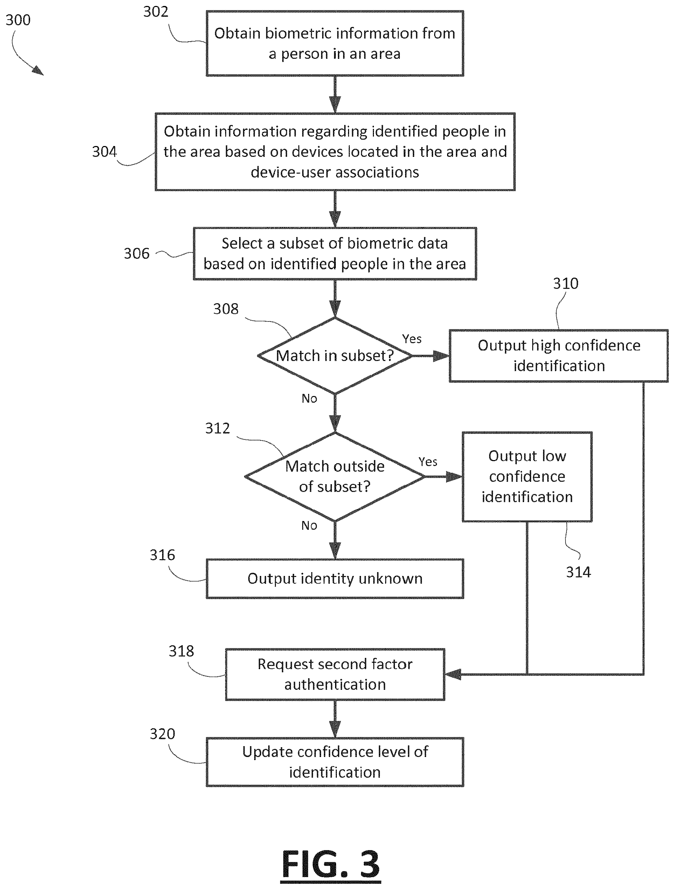

A further example method 300 of biometrically identifying a subject is shown in Figure 3. The method 300 includes an operation 302 of obtaining biometric information from a subject person in a defined geographic area. As noted above, the biometric information may be data representative of any person characteristic that may be used to uniquely identify a person. Examples include, but are not limited to, facial features, fingerprints, voice, irises, retinas, vein or palm patterns, DNA, *etc.* The input device may include a camera, microphone, scanner, capacitive sensors, or any such sensor for obtaining biometric data.

In operation 304, information regarding identified people in the area is obtained. The identified people are people associated with devices located in the area, and the identification of those people may be based on a set of stored associations between each device and one or more users.

A biometric authentication system stores a set of biometric profiles, *i.e.* biometric data, for a relatively large number of people. This may be stored in the form of a database or any other suitable data structure that enables queries to match biometric information to one or more of the stored profiles. In operation 306, a subset of the stored profiles may be selected based on the information regarding identified people in the area. That is, the subset may be selected to contain the biometric profile of any person identified in operation 304 that has a corresponding biometric profile in the database.

In some examples, before or after operation 306 the system may perform additional filtering (not shown), for example based upon static data, such as whether users are permitted to be in the area under consideration.

In operation 308, the authenticator determines whether a sufficient match is found between the obtained biometric information and one of the profiles in the subset. If so, then it outputs a signal indicating a high confidence match in operation 310. The signal may include the identity associated with the matched profile in some cases. In some other cases, the signal may indicate a class or category of authorized persons to which the identified person belongs, *e.g.* a security clearance level. In some cases, the signal simply indicates a positive match with high confidence.

If no match is found in operation 308, then in operation 312 the authenticator attempts to find a sufficient match between the biometric information and the remaining profiles, i.e. those profiles in the set that were not associated with individuals likely to be in the area based on detected local mobile devices. If a match is found, then in operation 314, a signal is output indicating a low confidence match. The signal may include the identity associated with the matched profile in some cases. In some other cases, the signal may indicate a class or category of authorized persons to which the identified person belongs, *e.g.* a security clearance level. In some cases, the signal simply indicates a positive match with low confidence.

If no match is found, then a signal is output indicate the failure to identify the subject in operation 316.

In some implementations, the identification of a match may trigger a second factor authentication operation 318. In some embodiments, the second factor authentication operation 318 may only be triggered in the case of a low confidence match from operation 314, or may be triggered in the case of both a high and low confidence match. The second factor authentication may include any suitable authentication mechanism, including, for example, messaging a mobile device associated with the biometric profile with a code or other secret data that is to be input to the authenticator via a user interface to confirm the identification. The mobile device may be the same device associated with the user in the device-user associations, or may be a different device.

In some cases, the second factor authentication may include inputting a passcode, pressing a confirmation button or UI element, providing additional biometric information via a mobile device, executing a defined motion with the mobile device, *etc.*

After the second factor authentication occurs, the confidence level of the identification may be updated - e.g. increased, if successful - and a signal to that effect output in operation 320.

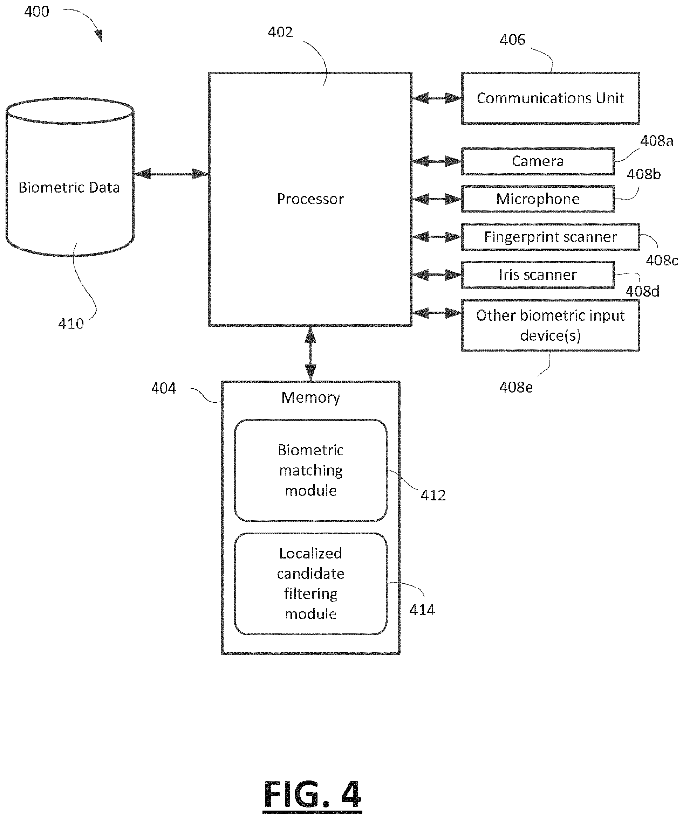

Reference is now made to Figure 4, which shows, in block diagram form, a simplified example of an authenticator 400. The authenticator 400 is an electronic device that includes a processor 402, memory 404, and one or more communication units 406 to enable wired and/or wireless communication with other systems or other parts of the electronic device. The processor 402 has access to a memory unit 410 storing biometric data, *e.g.* the database of biometric profiles. The memory unit 410 may be the same as memory 404 or may be separate. The memory unit 410 may be remoted located in some cases and accessed via the communication unit 406.

The authenticator 400 further includes one or more biometric input devices 408. Examples shown include a camera 408a, a microphone 408b, fingerprint sensor 408c, iris scanner 408d, or any other suitable biometric input device 408e. The biometric input devices 408 supply biometric information to the processor 402 obtained from a subject. In some instances, the biometric input devices 408 may be part of a physically separate device or system and may provide the biometric information via a communications connection, such as via the communications unit 406.

The memory 404 may store program instructions which, when executed by the processor 402, cause the processor 402 to carry out one or more of the operations described herein. The program instructions may include an operating system (not illustrated) enabling basic operations on the electronic device and providing a run-time environment within which applications may execute, as will be familiar to those of ordinary skill in the art.

In some implementations, the memory 404 may store a biometric matching module 412 containing executable program instructions that, when executed, cause the processor 402 to compare obtained biometric information to stored biometric profiles to determine whether a sufficient match is found. The biometric matching module 412 may output a signal indicating whether a match is found, indicating the identity of a matched profile, indicating a confidence level of a match and/or providing other information regarding the accuracy and reliability of match.

In some implementations, the memory 404 may store a localized candidate filtering module 414 containing executable program instructions that, when executed, cause the processor 402 to obtain information identifying persons likely to be in a defined geographic area associated with the biometric input device(s) 408 and based on mobile devices located in the defined geographic area, and to reduce the set of candidate biometric profiles to be searched by the biometric matching module 412 to a subset of candidate biometric profiles based on the information identifying persons. The subset selection may be implemented based on the intersection of the set of persons for whom biometric profiles are stored and the set of persons found in the information identifying persons likely to be located in the defined geographic area.

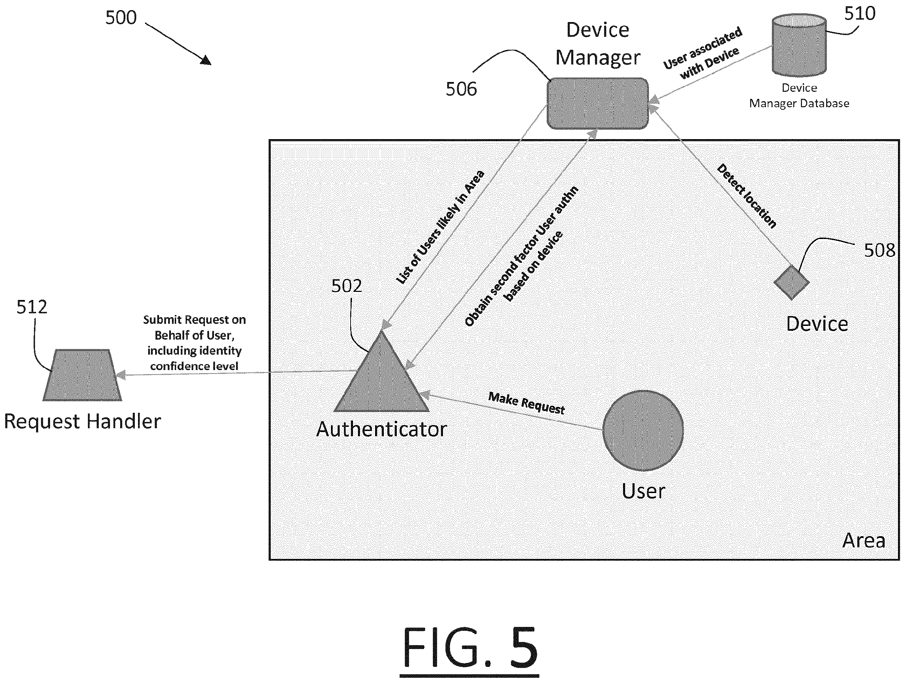

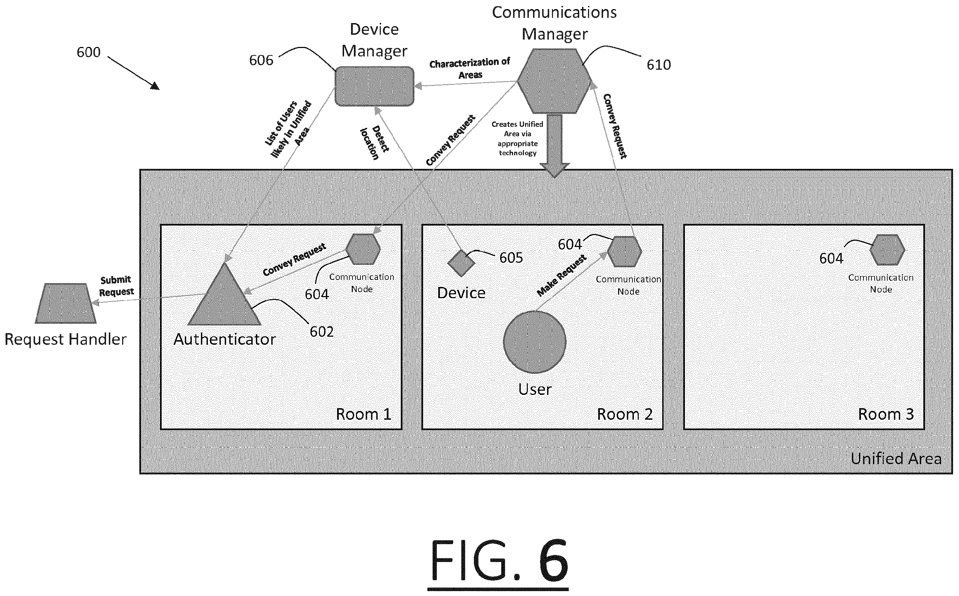

Reference will now be made to Figures 5 and 6, which diagrammatically illustrate first and second uses cases 500 and 600, respectively, of an example biometric identification system.

In the first use case 500, illustrated in Figure 5, an authenticator 502 receives, from a subject user, a request. The request include biometric information. The request may arrive via a user-activated input associated with a request, such a facility access request, a computing resource access request, or the like. The request come with biometric information or may cause the authenticator 502 to obtain biometric information via a biometric input device, such as a camera, microphone, or other sensor. The subject user is located within an area 504. In this example the authenticator 502 is also located within the area 504.

A device manager 506 is configured to track device locations. That is, the device manager 506 includes information regarding the location of devices and, specifically, identification information regarding devices 508 located within the area 504. The device manager 506 (or the authenticator 502) has, or has access to, a database 510 storing device-user associations. Accordingly, the device manager 506 provides the authenticator 502 with the set of users associated with devices 508 presently determined to be in the area 504. This may be provided periodically or in response to a specific request from the authenticator 502.

The authenticator 502 includes the stored biometric data for a plurality of users, *i.e.* their biometric profiles. Therefore, the authenticator 502 may select a subset of profiles based on the provided set of users associated with devices 508, and may attempt to match the obtained biometric information to one of the profiles in the subset. If no match is found, the authenticator 502 may attempt to match the biometric information to one of the other profiles.

A request handler 512 may be configured to carry out one of a number of operations in response to the user request, including granting access to a facility or computing resources, for example, dependent upon an output signal from the authenticator 502. The signal may indicate the confidence level of the identification, if any. In some cases, the request handler 512 may determine whether to seek further identification data if the confidence level is below a threshold. For example, if the identification is from the subset, the confidence level of the identification may be high, but if the identification is from the broader set after filing to match a profile in the subset, then the confidence level may be low. The authenticator 502 or the request handler 512 may seek additional identification authentication in the case of a low confidence identification. In some cases, the request handler 512 may provide restricted access or permissions to a user that is only identified with a low confidence level, and may provide less restricted access or permissions to a user that is identified at a high confidence level. A weakly identified user may be prompted to improve the level of access through providing additional identification information, such as through a second factor authentication process.

As an example, a request handler 512 may receive a request for access to specific data, e.g. current year's revenue figures for a company. That request is accompanied by biometric input to identify the requestor. Using the present system the authenticator may return an identification at a low confidence level, which may prompt the request handler to grant only limited access or a limited reply to the request, e.g. only a portion of the revenue figures, such as those already publicly disclosed, and not confidential current quarter figures.

The second use case 600 shown in Figure 6 involves a distributed system in which an authenticator 602 and a subject user may not be located in the same area. The authenticator 502 may be capable of obtaining biometric information from a number of physically separate areas using one or more local biometric input devices. A communication manager 610 may link the separate areas through communications nodes 604 in the respective areas, thereby creating a unified area for some purposes. In some cases, the communications nodes 604 themselves may operate as biometric input devices, for example if the communication node 604 receives audio or video data in connection with voice print and/or facial recognition biometrics. In other cases, a separate local biometric input device (not shown) receives and relays the biometric input to the authenticator. In some cases, that biometric input data received by the local biometric input device may be relayed to the authenticator via the communications manager 610.

A plurality of devices is present in the unified area, such as example device 605, may be identified by device manager 606. As discussed above, the device manager 606 provides the authenticator with information regarding users likely in the unified area based on user-device associations and the devices identified in the unified area. In some implementations, rather than providing data regarding users in the unified area, the device manager 606 provide information regarding users likely to be in the specific sub-area from which the request originates and from which the biometric input was received.

One example of the second use case 600 involves a conference call between a number of participants in dispersed locations. During the call, a participant may make an audible voice request that is relayed via the communication manager 610 to all the other communication nodes 604, and that is received by the authenticator 602 located one of the other sub-areas. The authenticator 602 is then able to respond to the request by attempting to biometrically identify the requestor using voice print technology, for example. The device manager may provide identification of persons likely located in the unified area based on user-device associations to aid the authenticator 602.

It will be appreciated that the authenticator and any other electronic devices described herein may be implemented in a number of computing devices, including, without limitation, servers, suitably-programmed general purpose computers, and mobile devices. The described devices and system may be implemented by way of software containing instructions for configuring a processor or processors to carry out the functions described herein. The software instructions may be stored on any suitable non-transitory computer-readable memory, including CDs, RAM, ROM, Flash memory, etc.

It will be understood that the devices described herein and the module, routine, process, thread, or other software component implementing the described method/process for biometric identification may be realized using standard computer programming techniques and languages. The present application is not limited to particular processors, computer languages, computer programming conventions, data structures, other such implementation details. Those skilled in the art will recognize that the described processes may be implemented as a part of computer-executable code stored in volatile or non-volatile memory, as part of an application-specific integrated chip (ASIC), etc.
biometric identification may be realized using standard computer programming techniques and languages. The present application is not limited to particular processors, computer languages, computer programming conventions, data structures, other such implementation details. Those skilled in the art will recognize that the described processes may be implemented as a part of computer-executable code stored in volatile or non-volatile memory, as part of an application-specific integrated chip (ASIC), etc.

The present application also provides for a computer-readable signal encoding the data produced through application of an encoding process in accordance with the present application.

Certain adaptations and modifications of the described embodiments can be made. Therefore, the above discussed embodiments are considered to be illustrative and not restrictive.

## Claims

1. A method of identifying a person located in a defined geographic area associated with a source of biometric information using an authenticator (12, 602), wherein the authenticator (12, 602) is an electronic device, the authenticator (12, 602) including, or having access to, at least one memory unit that includes stored biometric data for a set of people, the method comprising:
obtaining biometric information from the person in the defined geographic area and information related to one or more devices located within the defined geographic area;
obtaining, from a stored set of associations between people and devices, one or more identified people based on the information related to one or more devices located within the defined geographic area;
reducing the set of people to a subset of people based on the one or more identified people;
in response to detecting (308) a sufficient match between the biometric information and the stored biometric data associated with an individual from the subset of people, outputting (310) a signal identifying said individual as the person;
in response to determining that no sufficient match is found between the biometric information and the stored biometric data associated with an individual from the subset of people, determining (312) whether a sufficient match is found between the biometric information and the stored biometric data associated with an individual from the set of people but not from the subset of people;
in response to determining that a match is found within the set of people but not from the subset of people, outputting (314) a confidence level and granting reduced-access to the person in response to a request for access based on the confidence level and/or requesting second factor authentication from the person; and
in response to detecting no match, outputting (316) a signal to indicate a failure to identify the person.

2. The method of claim 1, wherein the defined geographic area is proximate to the location of the authenticator (12) or is remote to the location of the authenticator (12).

3. The method of claim 1 or 2, wherein the defined geographic area is of variable size subject to a resolution limitation of a localized device detector (16) providing the information related to the one or more devices located within the defined geographic area.

4. The method of claim 1, wherein the method further comprises:
the authenticator (602) obtaining biometric information from a number of physically separate areas using one or more local biometric input devices;
providing a communication manager (610) to link the separate areas through communications nodes (604) in the respective areas, thereby creating a unified area as the defined geographic area;
using a device manager (606) to provide the authenticator (602) with information regarding users likely to be in a specific physically separate area of the unified area from which a request for identification originates and from which the biometric information was received.

5. The method detailed in any preceding claim, further comprising determining the devices that are located within the defined geographic area, wherein the determining the devices that are located within the defined geographic area is based on data from one or more local access points in a wireless network.

6. The method detailed in any preceding claim, wherein the stored set of associations includes a plurality of devices identifiers and, for each device identifier, one or more user identifiers.

7. The method detailed in any preceding claim, wherein reducing the set of people includes finding the subset as an intersection between the set of people and the one or more identified people.

8. The method detailed in any preceding claim, wherein the stored biometric data includes a biometric profile for each person in the set of people.

9. The method detailed in any preceding claim, wherein the biometric information includes one of a fingerprint scan, a facial image, an iris scan, a retinal scan, a palm pattern image, a vein pattern image, or a voice recording.

10. The method detailed in any preceding claim, wherein the signal further includes another confidence level.

11. The method detailed in any preceding claim, further comprising:
obtaining second biometric information from a second person in the defined geographic area;
determining there is no match between the second biometric information and stored biometric data associated with the subset of people;
detecting a sufficient match between the second biometric information and the stored biometric data associated with a second individual from the set of people but not in the subset of people;
outputting a second signal identifying the second individual as the second person and providing a low confidence indication; and
granting reduced-access to the second person in response to a request for access based on the low confidence indication and/or requesting second factor authentication from the second person.

12. A system (10) comprising a processor configured to carry out the method of any one of claims 1 to 11.

13. A computer program which when executed on a processor of a system (10) is configured to carry out the method of any one of claims 1 to 11.

14. A non-transitory computer-readable media storing computer-executable program instructions which, when executed, cause one or more processors to perform the method of any one of claims 1 to 11.

## Patentansprüche

1. Ein Verfahren zum Identifizieren einer Person, die sich in einem definierten geografischen Gebiet befindet, das mit einer Quelle biometrischer Informationen assoziiert ist, unter Verwendung eines Authentifikators (12, 602), wobei der Authentifikator (12, 602) eine elektronische Vorrichtung ist, wobei der Authentifikator (12, 602) mindestens eine Speichereinheit, die gespeicherte biometrische Daten für einen Satz von Personen umfasst, umfasst oder Zugriff darauf hat, wobei das Verfahren Folgendes beinhaltet:
Erhalten biometrischer Informationen von der Person in dem definierten geografischen Gebiet und Informationen in Bezug auf eine oder mehrere Vorrichtungen, die sich innerhalb des definierten geografischen Gebiets befinden;
Erhalten, aus einem gespeicherten Satz von Assoziationen zwischen Personen und Vorrichtungen, einer oder mehrerer identifizierter Personen basierend auf den Informationen in Bezug auf eine oder mehrere Vorrichtungen, die sich innerhalb des definierten geografischen Gebiets befinden;
Reduzieren des Satzes von Personen auf einen Teilsatz von Personen basierend auf der einen oder den mehreren identifizierten Personen;
als Reaktion auf das Detektieren (308) einer ausreichenden Übereinstimmung zwischen den biometrischen Informationen und den gespeicherten biometrischen Daten, die mit einem Individuum aus dem Teilsatz von Personen assoziiert sind,
Ausgeben (310) eines Signals, das das Individuum als die Person identifiziert;
als Reaktion auf das Bestimmen, dass keine ausreichende Übereinstimmung zwischen den biometrischen Informationen und den gespeicherten biometrischen Daten, die mit einem Individuum aus dem Teilsatz von Personen assoziiert sind, gefunden wird,
Bestimmen (312), ob eine ausreichende Übereinstimmung zwischen den biometrischen Informationen und den gespeicherten biometrischen Daten, die mit einem Individuum aus dem Satz von Personen, aber nicht aus dem Teilsatz von Personen assoziiert sind, gefunden wird;
als Reaktion auf das Bestimmen, dass eine Übereinstimmung innerhalb des Satzes von Personen, aber nicht aus dem Teilsatz von Personen gefunden wird, Ausgeben (314) eines Konfidenzniveaus und Gewähren eines reduzierten Zugriffs für die Person als Reaktion auf eine Zugriffsanforderung basierend auf dem Konfidenzniveau und/oder Anfordern einer Zweitfaktor-Authentifikation von der Person; und
als Reaktion auf das Detektieren keiner Übereinstimmung, Ausgeben (316) eines Signals, um ein Fehlschlagen beim Identifizieren der Person anzugeben.

2. Verfahren gemäß Anspruch 1, wobei sich das definierte geografische Gebiet in der Nähe des Standorts des Authentifikators (12) befindet oder von dem Standort des Authentifikators (12) entfernt ist.

3. Verfahren gemäß Anspruch 1 oder 2, wobei das definierte geografische Gebiet von variabler Größe ist, vorbehaltlich einer Auflösungsbegrenzung eines lokalisierten Vorrichtungsdetektors (16), der die Informationen in Bezug auf die eine oder die mehreren Vorrichtungen, die sich innerhalb des definierten geografischen Gebiets befinden, bereitstellt.

4. Verfahren gemäß Anspruch 1, wobei das Verfahren ferner Folgendes beinhaltet:
Erhalten, durch den Authentifikator (602), biometrischer Informationen von einer Anzahl physisch getrennter Gebiete unter Verwendung einer oder mehrerer lokaler biometrischer Eingabevorrichtungen;
Bereitstellen eines Kommunikationsmanagers (610), um die getrennten Gebiete durch Kommunikationsknoten (604) in den jeweiligen Gebieten zu verknüpfen, wodurch ein vereinheitlichtes Gebiet als das definierte geografische Gebiet erzeugt wird;
Verwenden eines Vorrichtungsmanagers (606), um dem Authentifikator (602) Informationen bezüglich Benutzern bereitzustellen, die sich wahrscheinlich in einem spezifischen physisch getrennten Gebiet des vereinheitlichten Gebiets befinden, von dem eine Anforderung zur Identifizierung stammt und von dem die biometrischen Informationen empfangen wurden.

5. Verfahren gemäß einem der vorhergehenden Ansprüche, ferner beinhaltend das Bestimmen der Vorrichtungen, die sich innerhalb des definierten geografischen Gebiets befinden, wobei das Bestimmen der Vorrichtungen, die sich innerhalb des definierten geografischen Gebiets befinden, auf Daten von einem oder mehreren lokalen Zugangspunkten in einem drahtlosen Netzwerk basiert.

6. Verfahren gemäß einem der vorhergehenden Ansprüche, wobei der gespeicherte Satz von Assoziationen eine Vielzahl von Vorrichtungskennungen und, für jede Vorrichtungskennung, eine oder mehrere Benutzerkennungen umfasst.

7. Verfahren gemäß einem der vorhergehenden Ansprüche, wobei das Reduzieren des Satzes von Personen das Finden des Teilsatzes als eine Schnittmenge zwischen dem Satz von Personen und der einen oder den mehreren identifizierten Personen umfasst.

8. Verfahren gemäß einem der vorhergehenden Ansprüche, wobei die gespeicherten biometrischen Daten ein biometrisches Profil für jede Person in dem Satz von Personen umfassen.

9. Verfahren gemäß einem der vorhergehenden Ansprüche, wobei die biometrischen Informationen eines von einem Fingerabdruckscan, einem Gesichtsbild, einem Irisscan, einem Netzhautscan, einem Handflächenmusterbild, einem Venenmusterbild oder einer Sprachaufzeichnung umfassen.

10. Verfahren gemäß einem der vorhergehenden Ansprüche, wobei das Signal ferner ein anderes Konfidenzniveau umfasst.

11. Verfahren gemäß einem der vorhergehenden Ansprüche, ferner beinhaltend:
Erhalten zweiter biometrischer Informationen von einer zweiten Person in dem definierten geografischen Gebiet;
Bestimmen, dass keine Übereinstimmung zwischen den zweiten biometrischen Informationen und gespeicherten biometrischen Daten, die mit dem Teilsatz von Personen assoziiert sind, besteht;
Detektieren einer ausreichenden Übereinstimmung zwischen den zweiten biometrischen Informationen und den gespeicherten biometrischen Daten, die mit einem zweiten Individuum aus dem Satz von Personen, aber nicht in dem Teilsatz von Personen assoziiert sind;
Ausgeben eines zweiten Signals, das das zweite Individuum als die zweite Person identifiziert und eine Angabe niedriger Konfidenz bereitstellt; und
Gewähren eines reduzierten Zugriffs für die zweite Person als Reaktion auf eine Zugriffsanforderung basierend auf der Angabe niedriger Konfidenz und/oder Anfordern einer Zweitfaktor-Authentifikation von der zweiten Person.

12. Ein System (10), das einen Prozessor beinhaltet, der konfiguriert ist, um das Verfahren gemäß einem der Ansprüche 1 bis 11 auszuführen.

13. Ein Computerprogramm, das, wenn es auf einem Prozessor eines Systems (10) ausgeführt wird, konfiguriert ist, um das Verfahren gemäß einem der Ansprüche 1 bis 11 auszuführen.

14. Ein nicht transitorisches computerlesbares Medium, das computerausführbare Programmanweisungen speichert, die, wenn sie ausgeführt werden, einen oder mehrere Prozessoren veranlassen, das Verfahren gemäß einem der Ansprüche 1 bis 11 durchzuführen.

## Revendications

1. Un procédé d'identification d'une personne située dans une zone géographique définie associée à une source d'informations biométriques en utilisant un authentificateur (12, 602), dans lequel l'authentificateur (12, 602) est un dispositif électronique, l'authentificateur (12, 602) incluant, ou ayant accès à, au moins une unité formant mémoire qui inclut des données biométriques stockées pour un ensemble d'êtres humains, le procédé comprenant :
l'obtention d'informations biométriques auprès de la personne dans la zone géographique définie et d'informations ayant trait à un ou plusieurs dispositifs situés au sein de la zone géographique définie ;
l'obtention, à partir d'un ensemble stocké d'associations entre des êtres humains et des dispositifs, d'un ou de plusieurs êtres humains identifiés sur la base des informations ayant trait à un ou plusieurs dispositifs situés au sein de la zone géographique définie ;
la réduction de l'ensemble d'êtres humains en un sous-ensemble d'êtres humains sur la base des un ou plusieurs êtres humains identifiés ;
en réponse à la détection (308) d'une concordance suffisante entre les informations biométriques et les données biométriques stockées associées à un individu issu du sous-ensemble d'êtres humains, la fourniture en sortie (310) d'un signal identifiant ledit individu comme étant la personne ;
en réponse à la détermination qu'aucune concordance suffisante n'est trouvée entre les informations biométriques et les données biométriques stockées associées à un individu issu du sous-ensemble d'êtres humains, la détermination (312) quant à savoir si une concordance suffisante est trouvée entre les informations biométriques et les données biométriques stockées associées à un individu issu de l'ensemble d'êtres humains mais pas du sous-ensemble d'êtres humains ;
en réponse à la détermination qu'une concordance est trouvée au sein de l'ensemble d'êtres humains mais pas du sous-ensemble d'êtres humains, la fourniture en sortie (314) d'un niveau de confiance et l'octroi à la personne d'un accès réduit en réponse à une demande d'accès sur la base du niveau de confiance et/ou la demande à la personne d'une authentification à deuxième facteur ; et
en réponse à la détection d'une absence de concordance, la fourniture en sortie (316) d'un signal pour indiquer un échec à identifier la personne.

2. Le procédé de la revendication 1, dans lequel la zone géographique définie est à proximité de l'emplacement de l'authentificateur (12) ou est à distance de l'emplacement de l'authentificateur (12).

3. Le procédé de la revendication 1 ou de la revendication 2, dans lequel la zone géographique définie est de taille variable dépendant d'une limitation de résolution d'un détecteur de dispositifs localisé (16) fournissant les informations ayant trait aux un ou plusieurs dispositifs situés au sein de la zone géographique définie.

4. Le procédé de la revendication 1, le procédé comprenant en outre :
l'obtention par l'authentificateur (602) d'informations biométriques provenant d'un certain nombre de zones physiquement séparées en utilisant un ou plusieurs dispositifs d'entrée biométrique locaux ;
la fourniture d'un gestionnaire de communication (610) pour relier les zones séparées par l'intermédiaire de nœuds de communications (604) dans les zones respectives,
créant de ce fait une zone unifiée comme étant la zone géographique définie ;
l'utilisation d'un gestionnaire de dispositifs (606) pour fournir à l'authentificateur (602) des informations concernant des utilisateurs susceptibles de se trouver dans une zone physiquement séparée spécifique de la zone unifiée de laquelle émane une demande d'identification et depuis laquelle les informations biométriques ont été reçues.

5. Le procédé détaillé dans n'importe quelle revendication précédente, comprenant en outre la détermination des dispositifs qui sont situés au sein de la zone géographique définie, dans lequel la détermination des dispositifs qui sont situés au sein de la zone géographique définie est basée sur des données provenant d'un ou de plusieurs points d'accès locaux dans un réseau sans fil.

6. Le procédé détaillé dans n'importe quelle revendication précédente, dans lequel l'ensemble stocké d'associations inclut une pluralité d'identifiants de dispositif et, pour chaque identifiant de dispositif, un ou plusieurs identifiants d'utilisateur.

7. Le procédé détaillé dans n'importe quelle revendication précédente, dans lequel la réduction de l'ensemble d'êtres humains inclut le fait de trouver le sous-ensemble comme étant un recoupement entre l'ensemble d'êtres humains et les un ou plusieurs êtres humains identifiés.

8. Le procédé détaillé dans n'importe quelle revendication précédente, dans lequel les données biométriques stockées incluent un profil biométrique pour chaque personne dans l'ensemble d'êtres humains.

9. Le procédé détaillé dans n'importe quelle revendication précédente, dans lequel les informations biométriques incluent un élément parmi une lecture d'empreinte digitale, une image faciale, une lecture de l'iris, une lecture rétinienne, une image des lignes de la paume, une image du réseau veineux, ou un enregistrement vocal.

10. Le procédé détaillé dans n'importe quelle revendication précédente, dans lequel le signal inclut en outre un autre niveau de confiance.

11. Le procédé détaillé dans n'importe quelle revendication précédente, comprenant en outre :
l'obtention de deuxièmes informations biométriques auprès d'une deuxième personne dans la zone géographique définie ;
la détermination qu'il n'y a aucune concordance entre les deuxièmes informations biométriques et les données biométriques stockées associées au sous-ensemble d'êtres humains ;
la détection d'une concordance suffisante entre les deuxièmes informations biométriques et les données biométriques stockées associées à un deuxième individu issu de l'ensemble d'êtres humains mais ne figurant pas dans le sous-ensemble d'êtres humains ;
la fourniture en sortie d'un deuxième signal identifiant le deuxième individu comme étant la deuxième personne et fournissant une indication de confiance basse ; et
l'octroi à la deuxième personne d'un accès réduit en réponse à une demande d'accès sur la base de l'indication de confiance basse et/ou la demande à la deuxième personne d'une authentification à deuxième facteur.

12. Un système (10) comprenant un processeur configuré pour effectuer le procédé de l'une quelconque des revendications 1 à 11.

13. Un programme d'ordinateur qui, lorsqu'il est exécuté sur un processeur d'un système (10), est configuré pour effectuer le procédé de l'une quelconque des revendications 1 à 11.

14. Un support non transitoire lisible par ordinateur stockant des instructions de programme exécutables par ordinateur qui, lorsqu'elles sont exécutées, amènent un ou plusieurs processeurs à réaliser le procédé de l'une quelconque des revendications 1 à 11.
